**Europäisches Patentamt**

**European Patent Office**

**Office européen des brevets**

(19)

(11) Veröffentlichungsnummer: **0 169 414**
**A2**

(12) # EUROPÄISCHE PATENTANMELDUNG

(21) Anmeldenummer: **85108246.1**

(22) Anmeldetag: **03.07.85**

(51) Int. Cl.⁴: **G 01 L 9/00**
**G 01 L 9/06**

(30) Priorität: **27.07.84 DE 3427743**

(43) Veröffentlichungstag der Anmeldung:
**29.01.86 Patentblatt 86/5**

(84) Benannte Vertragsstaaten:
**AT CH DE FR GB IT LI**

(71) Anmelder: **Keller AG für Druckmesstechnik**
**St.-Galler-Str. 106**
**CH-8404 Winterthur(CH)**

(72) Erfinder: **Keller, Hans W.**
**Burgstrasse 142**
**CH-8408 Winterthur(CH)**

(72) Erfinder: **Von Ritter, Michael**
**Kurfirstenweg 22**
**CH-8400 Winterthur(CH)**

(74) Vertreter: **Flach, Dieter Rolf Paul, Dipl.-Phys. et al,**
**Patentanwälte Andrae/Flach/Haug/Kneissl**
**Prinzregentenstrasse 24**
**D-8200 Rosenheim(DE)**

(54) **Verfahren zur Temperaturkompensation und Messschaltung hierfür.**

(57) Eine Meßschaltung zur Durchführung eines Kompensationsverfahrens insbesondere für einen piezoresistiven Druckaufnehmer mit einer Meßbrücke (7) und einem nachgeordneten Ausgangs-Differenzverstärker (15) umfaßt ferner eine Stromversorgungsschaltung (13). Um eine optimale Temperaturkompensation für die Meßbrücke (7) bei maximaler Auflösung des Druckmeßsignals zu ermöglichen, ist vorgesehen, daß dem Ausgangs-Differenzverstärker (15) eine digitalisierte Kompensationsschaltung mit einem Analog-Digital-Wandler (21), einem Speicher (23) und zumindest einem weiteren Digital-Analog-Wandler (25, 27) vorgeordnet sind. Das temperaturabhängige Spannungsdifferenz-Eingangssignal an der Meßbrücke (7) wird über den nachgeordneten Wandler (21) digitalisiert und entsprechend in dem Speicher (23) abgespeicherte Kompensationswerte umgewandelt. Danach werden diese Werte erneut in ein analoges Kompensationssignal in einem Wandler (25, 27) umgewandelt. Bei an sich analoger Meßwertermittlung wird also allein die Fehlerkompensation auf digitalisiertem Wege durchgeführt.

./...

EP 0 169 414 A2

FIG. 2

PATENTANWÄLTE

# ANDRAE · FLACH · HAUG · KNEISSL 69414

## EUROPEAN PATENT ATTORNEYS

■ Patentanwalt Dipl.-Phys. Flach, Prinzregentenstr. 24, D-8200 Rosenheim ■

· ROSENHEIM

Dipl.-Phys. Dieter Flach
Prinzregentenstraße 24
D-8200 Rosenheim
Telefon: (0 80 31) 1 73 52
Telefax: (0 80 31) 1 79 72 (Gr. 3/2)
Telex: 5 216 281 afho d
Telegramm: Physicist
           Rosenheim

· MÜNCHEN

Dipl.-Chem. Dr. Steffen Andrae
Dipl.-Ing. Dietmar Haug
Dipl.-Chem. Dr. Richard Kneissl
Steinstrasse 44
D-8000 München 80
Telefon: (0 89) 48 20 89
Telegramm: pagema München

Firma Keller AG für Druckmeßtechnik, St.-Galler-Str. 106
CH-8404 Winterthur

181 P 12

---

Verfahren zur Temperaturkompensation und Meßschaltung
hierfür

---

Die Erfindung betrifft ein Verfahren zur Temperaturkompensation eines analogen temperaturabhängigen Differenzsignals einer Druckmeßschaltung, insbesondere für eine Druckmessung mittels eines piezoresistiven Druckaufnehmer nach dem Oberbegriff des Anspruches 1 sowie eine zugehörige Meßschaltung nach dem Oberbegriff des Anspruches 7.

Piezoresistive Druckaufnehmer sind bereits hinlänglich bekannt und haben sich in der Praxis gut bewährt. Dies gilt sowohl bei Messung für Absolutdrücke als auch für Referenzmessungen. Die auf dem Markt erhältlichen Druckaufnehmer bestehen dabei aus einer Druckzelle, auf deren Druckmeßmembran beispielsweise eine Brückenschaltung aus Widerständen für Druckmessung vorgesehen ist.

In der Praxis stellt sich allerdings das Problem, daß die Widerstandswerte der Widerstände in der Brückenschaltung, also dem Drucksensor temperaturabhängig sind, und somit das Ausgangs-Druckmeßsignal der Meßbrücke sich ebenfalls mit der Temperatur ändert. Eine exakte Druckmessung wird dadurch verhindert.

Es ist von daher bereits vorgeschlagen worden, eine analoge Kompensationsschaltung der Meßwertbrücke nachzuschalten, um ein weniger temperaturabhängiges Druckmeßsignal zu erzielen. Allerdings sind die Schaltungen in der Praxis aufwendig und bringen ebenfalls nicht den gewünschten Erfolg im Hinblick auf eine exakte Druckmessung.

Darüber hinaus sind auch Meßschaltungen bekannt geworden, bei der das analoge Druckmeßsignal digitalisiert und dann in einen nachgeordneten Computer oder Rechner eingegeben wird. Anhand des Rechners wird dann das digitalsierte Meßsignal rechnerisch so verarbeitet, daß eine Temperaturkompensation an dem gemessenen Signal stattfindet. Dieses Verfahren und die zugehörige Vorrichtung dazu weisen aber gleich mehrere Nachteile auf. Zum einen wird die Auflösung des Druckmeßsignals erheblich reduziert, da zunächst das gesamte Meßsignal digitalisiert werden muß. Die Auflösung kann dabei maximal nur den einzelnen digitalen Schritten entsprechen. Zudem ist die notwendige Hardware in Form eines notwendigen Rechners oder Computers enorm umfangreich und insbesondere teuer, so daß dieses Verfahren und diese Vorrichtung in vielen Fällen einer exakten Druckmessung bereits von vornherein ausscheidet.

Demgegenüber ist es Aufgabe der vorliegenden Erfindung eine Verfahren zur Temperaturkompensation und eine Vorrichtung für eine Meßschaltung insbesondere für einen piezoresistiven Druckaufnehmer zu schaffen, wobei mit relativ einfachen Mitteln eine maximale Auflösung des Meßsignals, also im analogen Betrieb der Meßwerterzielung eine optimale Kompensationsmöglichkeit bezüglich der Temperaturabhängigkeit vorzugsweise derart möglich ist, daß das Meßsignal eine lineare Druckabhängigkeit aufweist, wobei die Meßschaltung aufgrund ihres kompakten Aufbaues in praktisch allen Anwendungsfällen zum Einsatz kommen kann.

Die Aufgabe wird bezüglich des Verfahrens entsprechend den im kennzeichnenden Teil des Anspruches 1 und bezüglich der Meßschaltung bezüglich den im kennzeichnenden Teil des Anspruches 10 angegebenen Merkmalen gelöst. Vorteilhafte Ausgestaltungen der Erfindung sind in den Unteransprüchen angegeben.

Durch das erfindungsgemäße Verfahren wird auf verblüffende Weise bei Erhalt einer hohen Auflösung des Druckmeßsignals auf einfache Art und Weise eine voll ausreichende Kompensationsmöglichkeit für durch temperaturabhängige Meßsignale geschaffen. Dies wird im wesentlichen dadurch ermöglicht, daß das analoge Meßsignal von der Meßbrücke weiterhin als Druckmeßsignal abgegriffen wird, und daß bei dem sich temperaturabhängig verändernden Widerstand das analoge Spannungsdifferenz-Eingangssignal der Meßbrücke zunächst digitalisiert und in Abhängigkeit der Größe des digitalisierten Signals entsprechend von vorab gespeicherten Temperaturkompensationswerten ein digitalisiertes Kompensationssignal erzeugt wird. Dieses wiederum wird dann in ein analoges Kompensationssignal überführt, das zur Gegensteuerung verwendet wird. Mit anderen Worten erfolgt die Messung selbst analog mit der gewünschten, ansonsten nicht erreichbaren hohen Auflösung, wobei die Kompensation digitalisiert wird.

In einer besonders bevorzugten Ausführungsform nach Anspruch 2 ist ein erfindungsgemäßes Verfahren vorgesehen, das das temperaturabhängige Spannungsdifferenz-Eingangssignal in zwei digitalisierte Kompensationssignale umgesetzt wird, die einmal zur Empfindlichkeitskompensation und zum anderen zur Nullpunktkompensation der Meßschaltung dienen. Denn bei Temperaturveränderungen der Meßschaltung, insbesondere der Meßbrücke, verändert sich zum einen die Empfindlichkeit der Meßanordnung und zum anderen ist eine Verschiebung des Meßsignals dahingehend festzustellen, daß das Meßsignal, insbesondere Druckmeßsignal bei veränderter Temperatur von einer adjektiven Größe überlagert ist.

Als besonders günstig hat sich dabei herausgestellt, daß das eine digitalisierte Kompensationssignal für die Nullpunktkompensation einem Steuereingang eines Ausgangs-Differenzverstärkers zugeführt wird (Offset-Eingang) und daß das zweite digitalisierte Kompensationssignal für die Empfindlichkeitskompensation zur Steuerung der Stromversorgungsschaltung oder des (Ausgangs-)Verstärkers zugeführt wird.

Die erfindungsgemäße Meßschaltung für die erwähnte Kompensation nach Anspruch 10 umfaßt dabei einen den Eingängen der Meßschaltung (Meßbrücke) nachgeordneten Analog-Digital-Wandler, einen Speicher und zumindest einen weiteren nachgeordneten Digital-Analog-Wandler. Mit anderen Worten dient das temperaturabhängige analoge Fehlersignal (Spannungsdifferenz-Eingangssignal) zur Adressierung des nachgeordneten Speichers, in dem die temperaturabhängigen Kompensationswerte in digitalisierter Form abgespeichert sind. Die am Ausgang des Speichers anstehenden digitalisierten Kompensationswerte werden dann über den nachgeordneten Digital-Analog-Wandler wieder analogisiert und zur Gegensteuerung in die Meßschaltung zurückgeführt.

In einer Weiterbildung der Erfindung in einem der Ansprüche 11 bis 13 ist jeweils vorgesehen, daß der Ausgang des dem Speicher nachgeordneten Digital-Analog-Wandlers mit dem Eingang der Stromversorgungsschaltung oder mit dem Steuereingang des Ausgangs-Differenzverstärkers zur Empfindlichkeitskompensation bzw. mit dem Steuereingang (Offset-Eingang) des Ausgangs-Differenzverstärkers zur Nullpunktkompensation in Verbindung steht.

Ein demgegenüber noch weiter verbessertes Ergebnis läßt sich nach Anspruch 14 aber dann erzielen, wenn sowohl eine Nullpunktkompensation als auch eine Empfindlichkeitskompensation durchgeführt wird. Dazu sind im Speicher für beide genannte Kompensationsverfahren getrennt entsprechende digitalisierte Kompensationssignale abgespeichert, die zur Gegensteuerung am Ausgangsdifferenzverstärker bzw. zur Steuerung der Stromversorgung der Meßschaltung dienen.

Eine weitere Vereinfachung ergibt sich nach Anspruch 10, wenn bei Verwendung eines sowohl die digitalisierten Kompensationswerte für den Nullpunkt- als auch die Empfindlichkeitskompensation enthaltenden Speicher den nachgeordneten Digital-Analog-Wandlern für die entsprechende Kompensation jeweils ein Register als Zwischenspeicher vorgeschaltet ist, die beispielsweise in Taktverschiebung gespeichert werden.

Um die Meßschaltung insbesondere auch für hoch genaue Druckmessungen anwenden zu können, ist in einer besonders bevorzugten Ausführungsform nach Anspruch 17 ein weiterer Kompensationsregelkreis zur Linearisierung des Ausgangs-Meßsignales vorgesehen. Durch diese Schaltungsanordnung ist also das Druckmeßsignal linear abhängig vom tatsächlich gemessenen Druck.

In einer bevorzugten Ausführungsform nach Anspruch 22 kann die gesamte Schaltungsanordnung auf einem einzigen IC untergebracht werden, wodurch aufgrund der einfachen Handhabung diese Kombinationsschaltung bei beliebiger Druckmessung angewandt werden kann.

Als besonders günstig hat sich nach Anspruch 23 auch die Verwendung eines programmierbaren Festwertspeichers ergeben, da insbesondere auch nach Anspruch 24 jede einzelne Meßbrücke insbesondere auf einen Druckaufnehmer bei sich verändernden Drücken und Temperaturen durchgemessen und die dann individuell ermittelten Arten in dem programmierbaren Festwertspeicher abgespeichert werden können. Dadurch wird mit einfachsten Mitteln eine optimale Temperaturkompensation ermöglicht.

Weitere Vorteile, Einzelheiten und Merkmale der Erfindung ergeben sich nachfolgend aus den anhand von Zeichnungen näher erläuterten Ausführungsbeispielen. Dabei zeigen im einzelnen:

Fig. 1 eine schematische Schnittdarstellung einer üblicherweise verwendeten Druckmeßzelle mit auf der Meßmembran vorgesehenen Widerständen;

Fig. 2 ein Prinzipschaltplan der Meßschaltung;

Fig. 3 ein Pulsdiagramm für die Steuerung der Meßschaltung;

Fig. 4 eine schematische Darstellung eines integrierten zugehörigen Schaltkreises (IC);

Fig. 5 ein abgewandelter Prinzipschaltplan nach Fig. 2;

Fig. 6 ein Prinzipschaltplan einer Linearitäts-Kompensations-
Schaltung

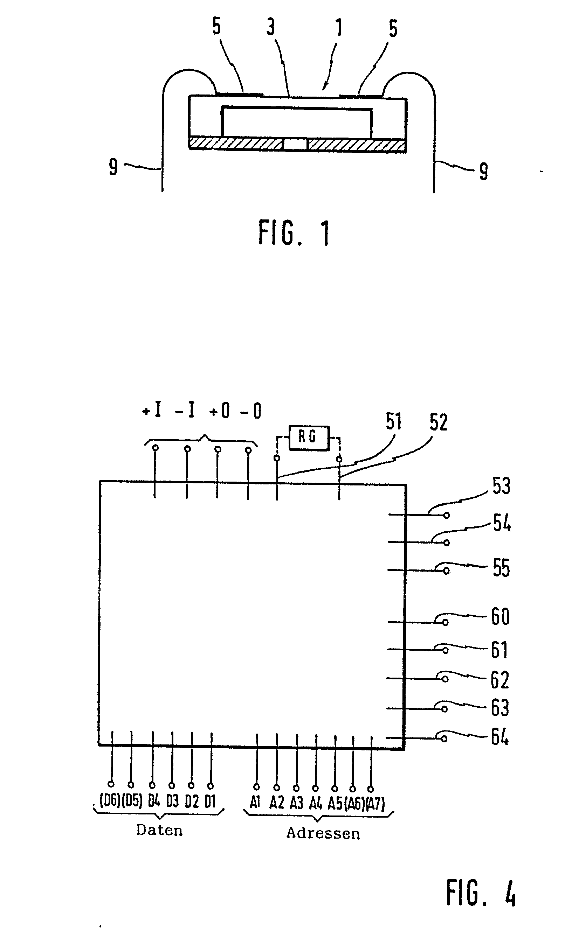

Nachfolgend wird auf Fig. 1 bezug genommen, in der eine Schnittdarstellung eines piezoresistiven Druckaufnehmers mit einer Meßzelle 1 mit einer Meßmembran 3 und darauf vorgesehenen Widerständen 5 gezeigt ist. Die Widerstände 5 sind in Form einer Meßbrücke 7 angeordnet, die über Drähte 9 mit Strom von einer Stromversorgungsschaltung gespeist und über weitere Leitungen das Meßsignal abgegriffen wird.

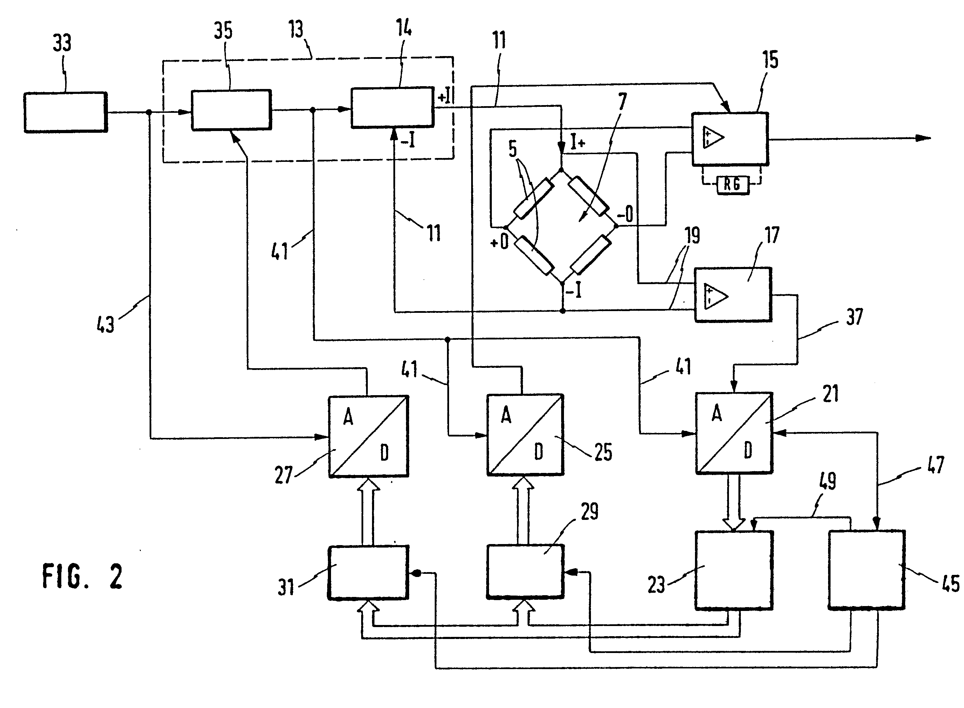

In Fig. 2 ist die Meßbrücke 7 des Drucksensors mit den Widerständen 5 gezeigt, wobei über Eingänge +I und -I die Meßbrücke mit Strom über Speiseleitungen 11 mit der erwähnten Stromversorgungsschaltung 13 in Verbindung steht. An den dazu gegenüberliegenden Ausgängen +O und -O wird das Differenzausgangssignal abgegriffen, das einem Ausgangsdifferenzverstärker 15 zugeführt wird, an dessen Ausgang das analoge Druckmeßsignal anliegt.

Wie bereits erwähnt ist, ist aber das Druckmeßsignal temperaturabhängig, so daß bei sich ändernden Temperaturen das Meßsignal verfälscht und exakte Druckmessungen somit unmöglich sind. Dazu ist eine nachfolgend erläuterte Kompensationsschaltung vorgesehen, wobei zur Erzielung einer hohen Meßgenauigkeit die analoge Meßwertermittlung (wie vorstehend erwähnt) beibehalten und lediglich die Kompensationsschaltung in digitalisierter Form vorgesehen ist.

Wie in der Figur zu ersehen ist, ist dazu ein weiterer Differenzverstärker 17 vorgesehen, dessen Eingänge über Leitungen 19 mit den Zuführungen +I und -I der Meßbrücke verbunden sind. Ferner umfaßt die Kompensationsschaltung einen nachgeordneten Analog-Digital-Wandler 21, einen programmierbaren Festwertspeicher 23 und zwei weitere nachgeordnete Digital-Analog-Wandler 25 und 27, denen noch zwei Register 29 und 31 vorgeschaltet sind. Ferner ist noch ein Referenz-Spannungsgeber 33 und eine nachgeordnete Spannungsregeleinheit 35 vorgesehen, über die die Stromversorgungsschaltung 13 gesteuert und geregelt wird.

Auf die Funktionsweise wird nachfolgend eingegangen.

Bei einer sich verändernden Temperatur an der Brückenschaltung 7 verändern sich mit den Widerständen auch das Spannungsdifferenz-Eingangssignal, das über die Leitung 19 dem Differenzverstärker 17 zugeführt wird. Dessen Spannungsdifferenz-Ausgangssignal liegt über eine Leitung 37 dem nachgeordneten Analog-Digital-Wandler 21 an und wird in ein digitalisiertes Kompensationssignal umgewandelt. In dem nachgeordneten Festwertspeicher 23 (PROM) sind digitalisierte Kompensationswert zur Kompensation der Druckmeßsignale abgespeichert. Um ein temperaturunabhängiges Druckmeßsignal zu erhalten, wird sowohl eine Nullpunktkompensation als auch eine Empfindlichkeitskompensation vorgenommen.

Dazu wird das durch den Analog-Digital-Wandler 21 digitalisierte Spannungsdifferenz-Signal dem Adreßeingang des Festwertspeichers 23 zugeführt, in dem u.a. auch die Kompensationswerte für die Nullpunktkompensation in digitaler Form eingespeichert sind. Diese Werte werden dem nachgeordneten Register 29 taktweise eingespeichert. Über den nachgeordneten Digital-Analog-Wandler 25 werden diese digitalisierten Werte wieder in ein analoges Kompensationssignal überführt, das über eine Leitung 39 am Steuereingang (Offset-Eingang) des Ausgangs-Differenzverstärkers 15 anliegt. Durch diese Kompensationsregelung wird das bei sich verändernder Temperatur in der Meßbrücke 7 sich verändernde Druckmeßsignal zumindest teilweise in Richtung auf den objektiv gemessenen Wert hin korrigiert.

Da aber bei sich verändernder Temperatur in der Meßbrücke 7 nicht nur eine Fälschung des gemessenen Druckmeßsignals durch Addition einer temperaturabhängigen Größe, sondern darüber hinaus auch eine Veränderung der Empfindlichkeit in der Meßbrücke 7 stattfindet, ist ergänzend hierzu eine Empfindlichkeitskompensation vorgesehen. Dazu werden ebenfalls in Abhängigkeit des gemessenen Spannungsdifferenz-Eingangssignals und damit in Abhängigkeit des digitalisierten Kompensationssignales weitere hierfür erforderliche Kompensationswerte in digitaler Form im Festwertspeicher 23 gespeichert, die zunächst in das nachgeordnete Register 31 eingespeichert und dem ebenfalls nachgeordneten Digital-Analog-Wandler 27 zugeführt werden. Diese hier wieder in ein analoges Signal überführten Kompensationswerte werden dann einer Spannungsregeleinheit 35 zugeführt, die die Referenzspannung eines Referenzspannungsgebers 33 beispielsweise um fünf Prozent nach oben oder unten korrigieren kann. Durch die hierüber veränderte Ausgangsspannung wird auch die nachgeordnete Stromregd-einheit 14 im Sinne eines Ansteigens oder Sinkens des Speisestroms für die Meßbrücke 7 geregelt. Diese Erhöhung oder Erniedrigung des Speisestromes für die Meßbrücke 7 führt also zu einer multiplikativen Veränderung des am

Ausgangs-Differenzverstärkers anliegenden Differenzausgangssignales, aus dem das endgültige Druckmeßsignal gebildet wird.

Um eine funktionsgerechte Arbeitsweise der Analog-Digital- und Digital-Analog-Wandler zu erreichen, liegt ferner die geregelte Referenzspannung vom Ausgang der Spannungsregeleinheit 35 über Leitungen 41 auch am Analog-Digital-Wandler 21 und dem Digital-Analog-Wandler 25 an. An dem zweiten Digital-Analog-Wandler 27 liegt die Spannung des Referenzspannungsgebers 33 über die Leitung 43 an.

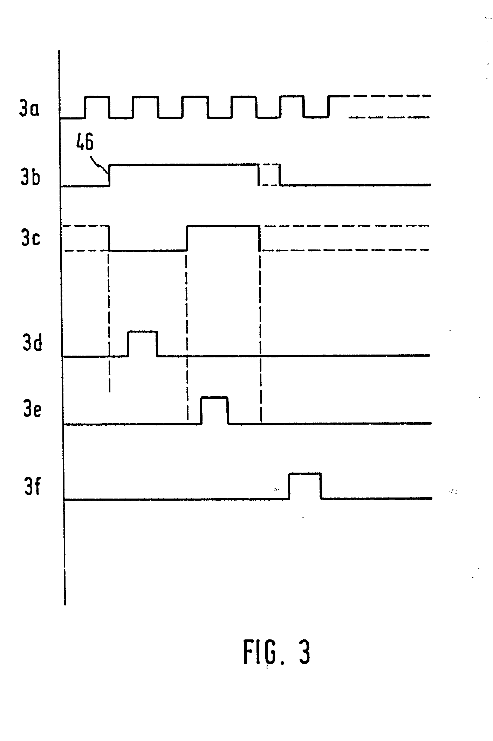

Unter Bezugnahme auf Figur 3 wird nachfolgend noch kurz die durch eine Steuereinheit erfolgte Steuerung der Kompensationsschaltung erläutert.

Die Steuereinheit 45 erzeugt einen regelmäßigen Takt-Impuls gemäß Fig. 3a. Sobald das über den Differenzverstärker 17 erzeugte Spannungsdifferenz-Eingangssignal in dem nachgeordneten Analog-Digital-Wandler 21 in ein digitalisiertes Kompensationssignal umgewandelt ist, wird vom Wandler 21 gemäß Fig. 3b durch die ansteigende Flanke 46 über die Steuerleitung 47 an die Steuereinheit 45 gemeldet, daß der Umwandlungsvorgang in eine digitalisiertes Signal abgeschlossen ist.

Danach wird über eine weitere Steuerleitung 49 ein Steuerimpuls MSB (Fig. 3c) von Steuereinheit 45 an den Festwertspeicher 23 auf den Adreßeingang gegeben, wobei gleichzeitig während der Dauer dieses MSB-Taktimpulses mit kürzerer Taktlänge ein Taktimpuls am Register 31 für die Empfindlichkeitskompensation anliegt. Durch diesen Taktimpuls werden die am Ausgang des Festwertspeichers 23 anliegenden digitalisierten Kompensationswerte für die Empfindlichkeitskompensation in das Register 31 eingelesen. (Fig. 3d).

Durch Potentialänderung des MSB-Taktimpulses im Adreßeingang des Festwertspeichers 23 werden dann die weiteren zusätzlichen digitalisierten Kompensationswerte im Speicher 23 für die Nullpunktkompensation abgerufen, und durch einen nächsten Taktimpuls (Fig. 3e) in das zweite Register 29 eingelesen. In jedem Zyklus wird dabei erneut ein analoges Spannungs-Differenzeingangssignal digitalisiert, entsprechend gespeicherte Kompensationswerte für die Nullpunkt- und Empfindlichkeitskompensation in die zugehörigen Register 29 und 31 eingespeichert, indem die alten Werte überlesen werden. Die jeweils so neu ermittelten Werte werden wieder in analoge Signale zur Kompensation umgesetzt.

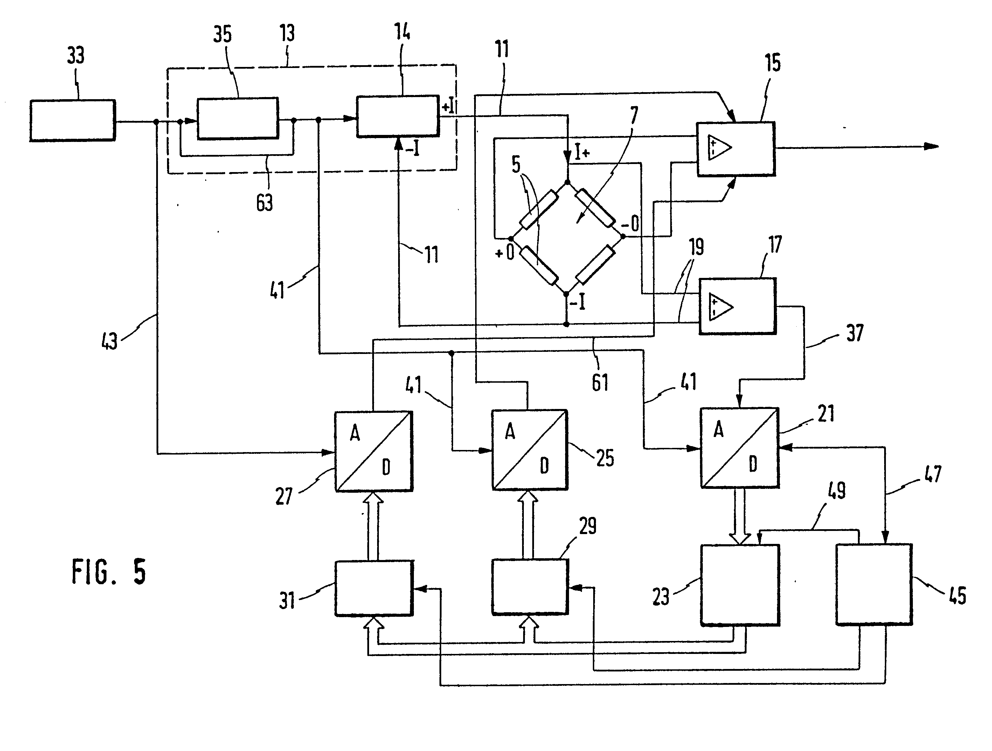

Abweichend vom gezeigten Ausführungsbeispiel kann natürlich durch Verdoppelung der Adreßeingänge und der Ausgänge am Festwertspeicher 23 auf die taktweise versetzte Abrufung und Einspeicherung in das Register 29 und 31 verzichtet werden, da dann über getrennte Leitungen jeweils die digitalisierten Kompensationswerte in die Register 29 und 31 eingelesen werden können. Durch einen Startimpuls (Fig. 3f) an den Wandler 21 wird ein neuer Konversionszyklus eingeleitet. Als besonders günstig und raumsparend erweist sich dabei, wenn die vorstehend erläuterte Schaltung nach Fig. 2 und 3 in einer kompakten Form eines integrierten Schaltkreises (IC) gemäß Fig. 4 angeordnet wird. Beispielsweise läßt sich eine ausreichende Kapazität für die Schaltung erreichen, wenn Vier-, Fünf- oder Sechs-Bit-Digital-Analog/Analog-Digital-Wandler vorgesehen sind, wobei der Festwertspeicher dann eine Kapazität von 32 x 4, 64 x 5 oder 128 x 6 aufweist. Die Zahl der Steckkontakte würde in diesem Fall 23,25 oder 27 betragen. Für den zuletzt genannten Fall umfaßt der integrierte Schaltkreis nach Fig. 4 sechs Adreßeingänge und sechs Daten ausgänge für den Festwertspeicher 21. Daneben sind die noch obenliegenden vier Ein- und Ausgänge an der Meßbrücke gezeigt. Zusätzlich an zwei weiteren Eingängen 51, 52 noch ein die Größe des Druckmeßsignals bereichsweise festlegender Verstärkungswiderstand RG zugeschaltet werden.

Beispielsweise über Eingänge 53 und 54 wird die Speisespannung dem integrierten Schaltkreis (IC) zugeführt, wobei das analoge Druckmeßsignal nach dem Ausgangsdifferenzverstärker 15 am Ausgang 55 abgegriffen werden kann.

Die nachfolgenden fünf Ein- und Ausgänge 60 bis 64 dienen zum Test der Schaltungsanordnung und zum Programmieren des integrierten Schaltkreises.

Bei einer Testphase wird zunächst eine entsprechende Verstärkung eingeregelt und dann für einige Drücke die Veränderung des Ausgangssignals bei veränderter Temperatur gemessen. Dabei müssen nur einige Temperaturen gemessen werden, für die üblichen Temperaturen können mittels eines Rechners die Kompensationswerte interpoliert und dann in dem Festwertspeicher abgespeichert werden. An den Eingängen 60 bis 62 liegen dann die Signale "Ende der Umwandlung in ein digitalisiertes Kompensationssignal", "Taktimpuls für Register 31" und "Taktimpuls für Register 29" an. Über den Eingang 63 kann das PROM ausgeschaltet und über den Eingang 64 die Programmierung des Festwertspeichers 23 vorgenommen werden. Nach individuell getesteter Temperaturabhängigkeit wird über die zuletzt genannten Eingänge dann der Festwertspeicher 23 mit entsprechenden Kompensationswerten geladen.

Da die Widerstände in der Meßbrücke 7 von einem Druckaufnehmer zum anderen in gewissen Bereichen variieren können, kann durch den vorstehend erwähnten individuellen Test die notwendige Temperaturkompensation für das Druckmeßsignal bei jedem einzelnen Druckaufnehmer ermittelt und entsprechend der Kompensationswerte abgespeichert werden.

Durch diese Anordnung wird also eine Genauigkeitserhöhung gegenüber herkömmlichen Kompensationsschaltungen um den Faktor 10 bei erheblich geringeren Testkosten erzielt, wobei vor allem keine spätere Kompensation mehr notwendig ist. Vor allem lassen sich auch nachträgliche Stabilitätsverschiebungen des Nullpunktes noch ohne Beeinflussung der Funktion durch ein Einschalten eines zusätzlichen Potentiometers oder Widerstandes in die Brücke nachträglich kompensieren. Vor allem weist das Druckmeßsignal selbst eine unendliche Auflösung auf, da die Messung selbst analog erfolgt, wobei ferner der Frequenzgang unbeeinflußt ist. Abschließend sei noch angemerkt, daß durch den erwähnten Festwiderstand ein normiertes Ausgangssignal mit einem beliebigen Niveau beispielsweise zwischen ein Volt und zehn Volt eingerichtet werden kann.

Die Verbesserung des Fehlersignals bei 4 Bit, 5 oder 6 Bit-Wandler sind aus der nachfolgenden Tabelle bei einer Temperaturänderung von 100°K ersichtlich.

| | Auflösung der Empfindlichkeits-Kompensation | Auflösung der Nullpunkt-Kompensation | Temperatur-Auflösung | Max. Fehler % | amAuf-nehmer |
|---|---|---|---|---|---|
| 4 bit | 0.625 % | 2 mV | 6.5 K | 1.2 % | 4.5 mV |
| 5 bit | 0.312 % | 1 mV | 3.3 K | 0.6 % | 2.25 mV |
| 6 bit | 0.156 % | 0.5 mV | 1.64 K | 0.35 % | 1.15 mV |

Nachfolgend wird auf Figur 5 Bezug genommen, in der eine zu Figur 2 alternative Kompensationsregelung für die Empfindlichkeits-Kompensation gezeigt ist.

Dieses Ausführungsbeispiel unterscheidet sich zu Figur 2 dadurch, daß die Kompensation nicht über eine veränderte Spannungsregeleinheit 35 zur Anpassung des an der Meßbrücke 7 liegenden Stromes, sondern über den Ausgangs-Differenzverstärker 15 erfolgt. Dazu ist der Ausgang des Digital-Analog-Wandlers 27 über eine Leitung 61 mit dem Steuereingang (Gain) des Ausgangs-Differenzverstärkers 15 zur Gegenkopplung verbunden, wodurch ebenfalls eine multiplikative Kompen-sation zur Erzielung eines temperaturunabhängigen Druckmeßsignales erfolgt. Dabei ist ferner der Eingang der Stromregeleinheit 14 über eine Leitung 63 direkt mit dem Referenz-Spannungsgeber 33 verbunden. Ansonsten ist die Wirkungsweise dieser Schaltung identisch mit der unter Bezugnahme auf Figur 2 geschilderten.

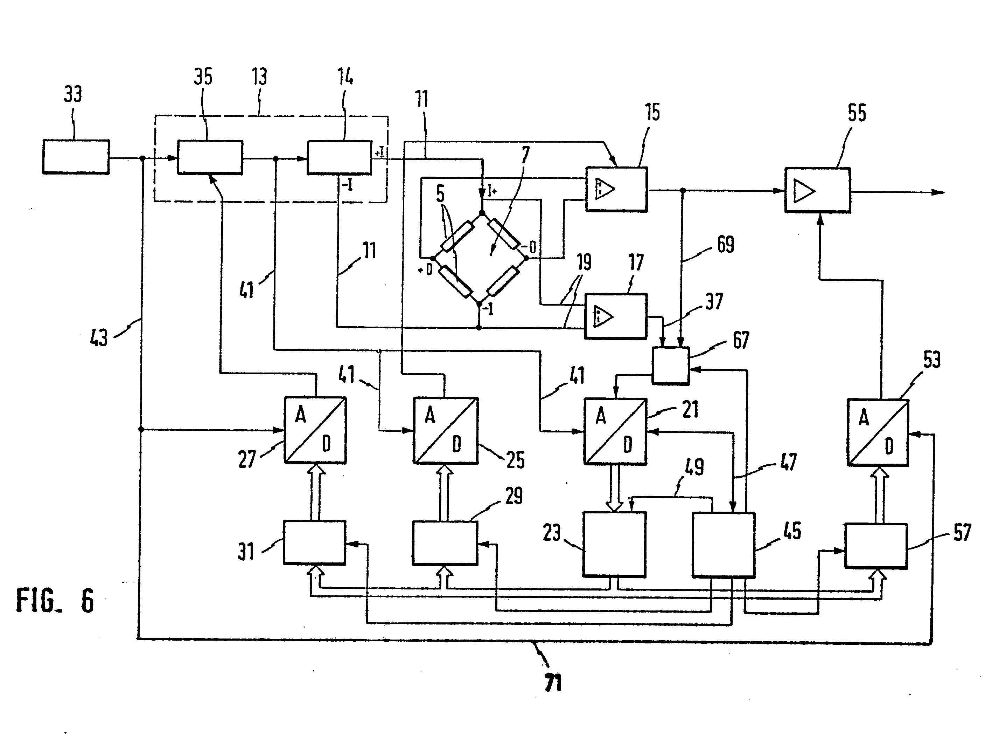

In Figur 6 ist eine weitere Abwandlung zu Figur 2 gezeigt, wonach (genauso wie bei dem Ausführungsbeispiel nach Fi-gur 5) zusätzlich eine Linearisierung des Druckausgangssignales bewerkstelligt werden kann. Dies erweist sich insbesondere bei hoch genauen Druckmeßgeräten als besonders günstig.

Ergänzend zu der Schaltung nach Figur 2 ist im Ausführungsbeispiel nach Figur 6 noch ein Analogschalter 67 vorgesehen, an dessen einem Eingang das Spannungsdifferenz-Eingangssignal des Differenzverstärkers 17 und am anderen Eingang das temperaturkompensierte Druckmeßsignal über eine Leitung 69 ansteht, die vom Analogschalter 67 zum Ausgang des Ausgangs-Differenzverstärkers 15 führt. Über diesen Analogschalter wird durch entsprechende Zeitsteuerung von der Steuereinheit 45 wahlweise das eine und das andere Signal verschachtelt dem nachgeordneten Analog-Digital-Wandler 21 zum Digitalisieren der Signale zugeführt. Im nachgeordneten Speicher 23 sind dann neben den Kompensationswerten für die Nullpunkt- und die Empfindlichkeitskompensation auch noch weitere digitalisierte Kompensationswerte für die Linearitäts-Kompensation abgespeichert, wobei über dem MSB-Steuerimpuls über die Leitung 49 von der Steuereinheit 45 die unterschiedlichen Kompensationswerte am Adreßeingang des Speichers 23 angesteuert werden.

Die digitalisierten und abgespeicherten Kompensationswerte werden dann taktweise versetzt nicht nur den Registern 29 und 31, sondern bezüglich der digilisierten Linearitäts-Kompensationswerte auch einem zusätzlichen Register 57 zur Zwischenspeicherung und Weiterleitung an einen nachgeordneten Digital-Analog-Wandler 53 zugeführt. Das entsprechend über dem Wandler 53 erzeugte analoge Signal wird dann einem weiteren Endverstärker 55 (Differenzverstärker) zugeführt, und zwar dessen Offset-Eingang. Dieser Endverstärker 55 ist in Reihe mit dem Ausgangsdifferenzverstärker 15 geschaltet. Durch diese Schaltungsanordnung wird also das am Endverstärker 55 anliegende temperaturkompensierte Druckmeßsignal entsprechend den abgespeicherten digitalisierten Kompensationswerten im Speicher 23 so kompensiert, daß das am Ausgang des Endverstärkers 55 anstehende temperaturkompensierte Meßsignal direktproportional ist dem tatsächlich an der Meßbrücke 7 anliegenden Druck.

Der Vollständigkeit halber wird noch darauf hingewiesen, daß am Digital-Analog-Wandler 53 über eine Leitung 71 die Referenzspannung anliegt.

Abweichend zu dem gezeigten Ausführungsbeispiel kann natürlich unter Verwendung eines zusätzlichen Analog-Digital-Wandlers und gegebenenfalls eines zusätzlichen Speichers auch auf den Analogschalter 67 verzichtet werden.

Abschließend wird noch darauf hingewiesen, daß insbesondere bei der zusätzlich vorgesehenen Linearitätskompensation es sich als günstig erwiesen hat, einen Speicher mit noch größeren Kapazitätswerten als vorstehend erläutert zu verwenden.

Die Erfindung eignet sich also nicht nur zur Kompensation bei Druckaufnehmern, sondern auch bei Kraft- und Beschleunigungsaufnehmern mit Voll- und Halbbrücken. Der Hauptanwendungsfall liegt dabei bei piezoresistiven Meßwertaufnehmern vor, z. B. auch mittels Dehnmeßstreifen.

• Patentanwalt Dipl.-Phys. Flach, Prinzregentenstr. 24, D-8200 Rosenheim •

**ROSENHEIM**
Dipl.-Phys. Dieter Flach
Prinzregentenstraße 24
D-8200 Rosenheim
Telefon: (0 80 31) 1 73 52
Telefax: (0 80 31) 1 79 72 (Gr. 3/2)
Telex: 5 216 281 afho d
Telegramm: Physicist
Rosenheim

**MÜNCHEN**
Dipl.-Chem. Dr. Steffen Andrae
Dipl.-Ing. Dietmar Haug
Dipl.-Chem. Dr. Richard Kneissl
Steinstrasse 44
D-8000 München 80
Telefon: (0 89) 48 20 89
Telegramm: pagema München

-17-

Firma Keller AG für Druckmeßtechnik, St.-Galler-Str. 106,
CH-8404 Winterthur

181 P 12

-----------------------------------------------------

Verfahren zur Temperaturkompensation und Meßschaltung hierfür

-----------------------------------------------------


### Ansprüche:

1. Verfahren zur Temperaturkompensation eines analogen temperaturabhängigen Ausgangssignals (Differenzausgangssignals) an einer Druckmeßschaltung zur Erzielung eines Druckmeßsignals, insbesondere für einen piezoresistiven Druckaufnehmer, bei dem ein Meßkreis aus einer auf eine Druckmeßzelle angeordneten Meßbrücke besteht, an der das einem nachgeordneten Ausgangsdifferenzverstärker zuführbare Differenzausgangssignal zur Erzeugung des Druckmeßsiganles abgegriffen wird, dadurch gekennzeichnet, daß für die Temperaturkompensation das am Meßkreis (Meßbrücke) anliegende temperaturabhängige analoge Spannungsdifferenz-Eingangssignal abgegriffen, digitalisiert und in Abhängigkeit der Größe des digitalisierten Spannungsdifferenz-Eingangssignales in vorab gespeicherte Temperaturkompensatioswerte umgewandelt wird, welches anschließend wieder in ein analoges Kompensationssignal konvertiert und der Meßschaltung zur Kompensationsregelung zugeführt wird.

2. Verfahren nach Anspruch 1, **dadurch gekennzeichnet,** daß das temperaturabhängige digitalisierte Spannungsdifferenz-Eingangssignal zur Erzeugung einer Empfindlichkeitskompensation und einer Nullpunktkompensation zumindest in zwei verschiedene digitalisierte Kompensationswerte umgewandelt und der Meßschaltung zur entsprechenden Gegenregelung zugeführt wird.

3. Verfahren nach Anspruch 1 oder 2, **dadurch gekennzeichnet,** daß der der Nullpunktkompensation dienende digitalisierte Kompensationswert nach Umwandlung in ein analoges Kompensationssignal dem Steuereingang (Offset-Eingang) des Ausgangs-Differenzverstärkers zugeführt wird.

4. Verfahren nach Anspruch 1 oder 2, **dadurch gekennzeichnet,** daß der der Empfindlichkeitskompensation dienende digitalisierte Kompensationswert nach Umwandlung in ein analoges Signal der Stromversorgungsschaltung zur Regelung des Meßstromes zugeführt wird.

5. Verfahren nach einem der Ansprüche 1 bis 4, **dadurch gekennzeichnet,** daß der der Empfindlichkeitskompensation dienende digitalisierte Kompensationswert nach Umwandlung in ein analoges Signal einem regelbaren Ausgangsverstärker, vorzugsweise dem Ausgangsdifferenzverstärker zur Regelung des Meßstromes zugeführt wird.

6. Verfahren nach einem der Ansprüche 1 bis 5, **dadurch gekennzeichnet,** daß bei der Nullpunktkompensation mittels des analogen Kompensationssignales eine additive Veränderung des Meßsignales (Druckmeßsignales) bewirkt wird.

7. Verfahren nach einem der Ansprüche 1 bis 5, **dadurch gekennzeichnet,** daß bei der Empfindlichkeitskompensation mittels des analogen Kompensationssignales eine multiplikative Veränderung der Eingangsspannung an der Meßschaltung (Meßbrücke) bzw. am Ausgangsverstärker (Ausgangsdifferenzverstärker) und somit eine multiplikative Veränderung des Meßsignales (Druckmeßsignales) bewirkt wird.

8. Verfahren nach einem der Ansprüche 1 bis 7, **dadurch gekennzeichnet,** daß ferner das analoge und temperaturkompensierte Meßsignal (Druckmeßsignal) linearisiert wird, indem es digitalisiert und in Abhängigkeit seiner Größe in vorab gespeicherte Linearitäts-Kompensationswerte umgewandelt und anschließend wieder in ein analoges Linearitäts-Kompensationssignal konvertiert und der Meßschaltung zur Kompensationsregelung zugeführt wird.

9. Verfahren nach Anspruch 8, **dadurch gekennzeichnet,** daß das analogisierte Linearitäts-Kompensationssignal einem zusätzlich vorgesehenen regelbaren Endverstärker (End-Differenzverstärker) zur Regelung des analogen Meßsignals (Druckmeßsignals) zugeführt wird.

10. Meßschaltung zur Durchführung des Verfahrens nach einem der Ansprüche 1 bis 9, insbesondere für ein piezoresistiven Druckaufnehmer mit einer Meßbrücke und einem nachgeordneten Ausgangs-Differenzverstärker, dem das analoge Differenz-Ausgangssignal zur Erzeugung des analogen Druckmeßsignals zugeführt wird, mit einer Stromversorgungsschaltung und einer Temperatur-Kompensationsschaltung, **dadurch gekenn-**

zeichnet, daß dem Ausgangs-Differenzverstärker (15) eine digitalisierte Kompensationsschaltung mit einem Analog-Digitaltal-Wandler (21), ein Speicher (23) und zumindest ein weiteren Digital-Analog-Wandler (25, 27) vorgeordnet sind, wobei der Eingang des Analog-Digital-Wandlers (21) vorzugsweise über einen Differenzverstärker (17) mit den Eingängen (+I, -I) der Meßschaltung (Meßbrücke 7) und dessen Ausgang mit den Adreßeingängen des nachgeordneten Speichers (23) verbunden ist, dessen Ausgänge zur Übertragung der darin gespeicherten digitalisierten temperaturabhängigen Kompensationswerte zumindest mit einem nachgeordneten Digital-Analog-Wandler (25, 27) in Verbindung stehen, an dessen Ausgang wiederum das analoge, der Meßschaltung zuführbare analoge Kompensationssignal ansteht.

11. Meßschaltung nach Anspruch 10, **dadurch gekennzeichnet,** daß ein dem Speicher (23) nachgeordneter Digital-Analog-Wandler (27) vorgesehen ist, dessen Ausgang mit dem Eingang der Stromversorgungsschaltung (13) der Meßschaltung (Meßbrücke 7) in Verbindung steht.

12. Meßschaltung nach Anspruch 10, **dadurch gekennzeichnet,** daß ein dem Speicher (23) nachgeordneter Digital-Analog-Wandler (27) vorgesehen ist, dessen Ausgang mit dem Steuereingang (Gain) des Ausgangs-Differenzverstärkers (15) in Verbindung steht. (Gegenkopplung).

13. Meßschaltung nach einem der Ansprüche 10 bis 12, **dadurch gekennzeichnet,** daß ein dem Speicher (23) nachgeordneter Digital-Analog-Wandler (25) vorgesehen ist, dessen Ausgang mit dem Steuereingang (Offset-Eingang) des Ausgangs-Differenzverstärkers (15) in Verbindung steht.

14. Meßschaltung nach einem der Ansprüche 10 bis 13, dadurch gekennzeichnet, daß dem Speicher (23) zumindest zwei Kompensationsregelkreise mit je einem Digital-Analog-Wandler (25, 27) nachgeordnet sind, denen zur Empfindlichkeitskompensation und zur Nullpunktkompensation im Speicher (23) getrennt abgespeicherte digitalisierte Kompensationswerte zuführbar sind.

15. Meßschaltung nach einem der Ansprüche 10 bis 14, dadurch gekennzeichnet, daß am Speicher (23) ein weiterer Adreßeingang vorgesehen ist, der mit einer Steuereinheit (45) zur Abrufung der unterschiedlichen digitalisierten Kompensationswerte für die Empfindlichkeits- oder Nullpunktkompensation in Verbindung steht, und daß zwischen dem Speicher (23) und den beiden Digital-Analog-Wandlern (25, 27) je ein Register (29, 31) vorgeschaltet ist, in dem die digitalisierten Kompensationswerte für die Nullpunkt- oder Empfindlichkeitskompensation zwischenspeicherbar sind.

16. Meßschaltung nach einem der Ansprüche 10 bis 15, dadurch gekennzeichnet, daß die Stromversorgungsschaltung (13) eine durch das analoge Kompensationssignal des Digital-Analog-Wandlers (27) regelbare Spannungsregeleinheit (35) zur Veränderung des Speisestromes für die Meßschaltung (Meßbrücke 7) umfaßt.

17. Meßschaltung nach einem der Ansprüche 10 bis 16, dadurch gekennzeichnet, daß ein weiterer Kompensationsregelkreis zur Linearitätskompensation des Meßsignals mit einem Analag-Digital-Wandler (21), einem Speicher (23) und einem weiteren Digital-Analog-Wandler (53) vorgesehen ist, wobei der Eingang des Analog-Digital-Wandlers (21) mit dem Ausgang des Ausgangs-Differenzverstärkers (15) und sein Ausgang mit den Adreßeingängen des nachgeordneten Speichers (23) verbunden ist, dessen Ausgang zur Übertragung der darin gespeicherten digitalisierten Linearitäts-Kompensationswerte mit dem nachgeordneten Digital-Analog-Wandler (53) in Verbindung steht, dessen analoges Linearitäts-Kompensationssignal am Steuereingang (Offset) eines nachgeordneten regelbaren End-Verstärkers (End-Differenzverstärker 55) anliegt, dessen Verstärkungseingang mit dem Ausgang des Ausgangs-Differenzverstärkers (15) in Reihe geschaltet ist.

18. Meßschaltung nach einem der Ansprüche 10 bis 17, **dadurch gekennzeichnet,** daß für die Nullpunkt-, die Empfindlichkeits- und die Linearitätskompensation ein gemeinsamer Speicher (23) vorgesehen ist.

19. Meßschaltung nach Anspruch 18, **dadurch gekennzeichnet,** daß dem Speicher (23) lediglich ein einziger Analog-Digital-Wandler (21) vorgeschaltet ist, vor dessen Eingang zur wahlweisen Weiterleitung des am Eingang des Meßkreises anliegenden temperaturabhängigen analogen Spannungsdifferenz-Eingangssignals bzw. des analogen temperaturkompensierten Meßsignals ein Analogschalter (67) vorgeschaltet ist.

20. Meßschaltung nach Anspruch 17, **dadurch gekennzeichnet,** daß dem Digital-Analog-Wandler (53) zur Linearitätskompensation ein Register (55) zur Zwischenspeicherung vorgeschaltet ist.

21. Meßschaltung nach einem der Ansprüche 10 bis 20, dadurch gekennzeichnet, daß die Schaltung als integrierter Schaltkreis (IC) ausgebildet ist.

22. Meßschaltung nach Anspruch 21, dadurch gekennzeichnet, daß der Speicher (23) eine Kapazität vorzugsweise zwischen 32 x 4 bis 128 x 6 aufweist.

23. Meßschaltung nach der Ansprüche 10 bis 22, dadurch gekennzeichnet, daß der Speicher (23) aus einem programmierbarem Festwertspeicher (23) besteht.

24. Meßschaltung nach einem der Ansprüche 10 bis 23, dadurch gekennzeichnet, daß im Speicher (23) die für jede Meßschaltung (Meßbrücke 7) individuellen, mittels eines Tests ermittelten temperaturabhängigen digitalisierten Kompensationswerte abgespeichert sind.

25. Meßschaltung nach einem der Ansprüche 10 bis 24, dadurch gekennzeichnet, daß ein zusätzlicher Widerstand (RG) zur Festlegung des Verstärkungsfaktors am Ausgangs-Differenzverstärker (15) vorgesehen ist.

26. Meßschaltung nach einem der Ansprüche 10 bis 25, dadurch gekennzeichnet, daß das am Ausgang der Spannungsregeleinheit (35) anstehende regelbare Spannungsausgangssignal am Analog-Digital-Wandler (21) und am Digital-Analog-Wandler (25) für die Nullpunktkompensation als Referenzsignal ansteht.

27. Meßschaltung nach einem der Ansprüche 10 bis 26, dadurch durch gekennzeichnet, daß das am Ausgang des Referenzspannungsgebers (33) für die Spannungsregeleinheit (35) anstehende Spannungs-Referenzsignal am Digital-Analog-Wandler (27) für die Empfindlichkeitskompensation als Referenz-signal anliegt.

FIG. 1

FIG. 4

FIG. 2

FIG. 3

FIG. 5

0169414

FIG. 6